# EUROPÄISCHE PATENTSCHRIFT

(11) **EP 4 159 589 B1**
(45) Veröffentlichungstag und Bekanntmachung des Hinweises auf die Patenterteilung: **18.02.2026**
(21) Anmeldenummer: 22192049.9
(22) Anmeldetag: 25.08.2022
(51) Int. Cl.: B62D 5/065, B62D 12/00

(54) **BODENBEARBEITUNGSMASCHINE**
SOIL PROCESSING MACHINE
MACHINE DE TRAITEMENT DU SOL

(30) Priorität: 29.09.2021 DE 102021125185
(43) Veröffentlichungstag der Anmeldung: 05.04.2023
(73) Patentinhaber: Hamm AG, 95643 Tirschenreuth (DE)
(72) Erfinder: Dagner, Josef, Altenstadt (DE); Braunschläger, Stefan, Bärnau (DE); Klein, Thomas, Mitterteich (DE); Sperber, Michael, Waldsassen (DE)
(74) Vertreter: Ruttensperger Lachnit Trossin Gomoll

(56) Entgegenhaltungen:
- EP-A1- 4 151 889
- WO-A1-2020/200509
- DE-A1- 102007 016 112
- DE-A1- 2 950 391

## Beschreibung

Die vorliegende Erfindung betrifft eine Bodenbearbeitungsmaschine, wie zum Beispiel einen Bodenverdichter, der dazu eingesetzt werden kann, das Aufbaumaterial eines Untergrunds, wie zum Beispiel Asphalt, Erdreich oder Schotter, zu verdichten.

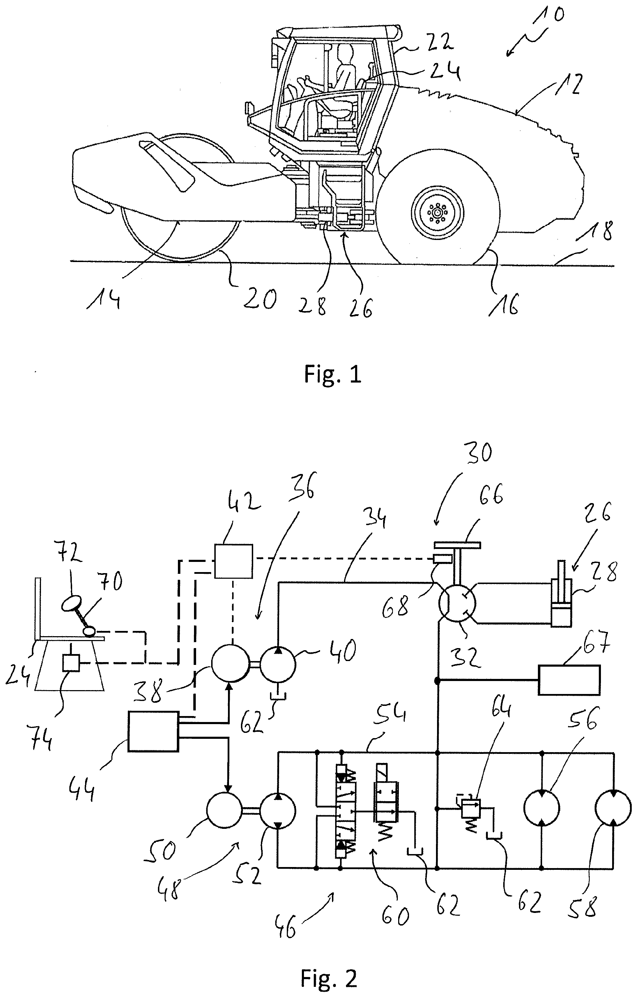

Ein Beispiel einer derartigen als Bodenverdichter ausgebildeten Bodenbearbeitungsmaschine ist in Fig. 1 dargestellt. Diese als Bodenverdichter ausgebildete Bodenbearbeitungsmaschine 10 ist mit einem Hinterwagen 12 und einem mit dem Hinterwagen 12 um eine näherungsweise vertikale Lenkachse schwenkbar verbundenen Vorderwagen 14 aufgebaut. Am Hinterwagen 12 sind Antriebsräder 16 vorgesehen, welche zum Bewegen des Bodenverdichters 10 auf dem zu verdichtenden Untergrund 18 zur Drehung antreibbar sind. Am Vorderwagen 14 ist eine als Verdichterwalze ausgebildete Bodenbearbeitungswalze 20 drehbar getragen. Bei dem in Fig. 1 dargestellten Aufbau eines Bodenverdichters kann beispielsweise auch die Bodenbearbeitungswalze 20 zur Drehung angetrieben sein. Alternativ kann die Bodenbearbeitungswalze 20, nur voranbewegt durch die Antriebsräder 16, über den Untergrund 18 rollen. Beispielsweise bei einem Bodenverdichter, bei welchem auch am Hinterwagen 12 eine Verdichterwalze vorgesehen ist, könnte eine oder könnten beide Verdichterwalzen zur Drehung angetrieben sein, um den Bodenverdichter über den Untergrund 18 zu bewegen.

Am Hinterwagen 12 ist ferner ein Bedienstand 22 vorgesehen, in welchem eine Bedienperson auf einen Bedienpersonsitz 24 Platz nehmen kann, um den Bodenverdichter zu bedienen. Im Bedienstand 22 sind ferner verschiedene, nachfolgend noch erläuterte Betätigungsorgane vorgesehen, über welche eine im Bedienstand 22 auf dem Bedienpersonsitz 24 Platz nehmende Bedienperson den Bodenverdichter bedienen kann. Im Allgemeinen weisen derartige Bodenverdichter am Hinterwagen 12 ein als Diesel-Brennkraftmaschine ausgebildetes Antriebsaggregat auf. Es ist darauf hinzuweisen, dass im Sinne der vorliegenden Erfindung der Hinterwagen 12 als derjenige Systembereich eines Bodenverdichters betrachtet wird, an dem ein derartiges Antriebsaggregat oder/und auch der Bedienstand 22 untergebracht sind. Bei einem Aufbau eines Bodenverdichters als schemelgelenkte Tandemwalze, bei welchem an einem im mittleren Bereich des Bodenverdichters vorgesehenen und im Allgemeinen ein Antriebsaggregat und einen Bedienstand tragenden Rahmenbereich in beiden Endbereichen desselben jeweils ein eine Bodenbearbeitungswalze drehbar tragender Lenkschemel um eine jeweilige Lenkachse schwenkbar getragen ist, ist dieser die beiden Lenkschemel schwenkbar tragende, zentral angeordnete Bereich des Bodenverdichters im Sinne der vorliegenden Erfindung als Hinterwagen zu betrachten.

Das Antriebsaggregat treibt eine bzw. mehrere Hydraulikpumpen an, um in verschiedenen Hydraulikkreisläufen Druckfluid bereitzustellen. So kann beispielsweis ein Fahr-Hydraulikkreislauf vorgesehen sein, über welchen den Antriebsrädern 16 zugeordnete Hydraulikmotoren mit Druckfluid gespeist werden können, um den Bodenverdichter über den Untergrund 18 zu bewegen. Weist ein derartiger Bodenverdichter eine oder mehrere zur Drehung angetriebene Verdichterwalzen bzw. Bodenbearbeitungswalzen 20 auf, können auch diesen Hydraulikmotoren zugeordnet sein, um diese zur Drehung anzutreiben. Ein weiterer Hydraulikkreislauf kann dazu dienen, ein Unwuchtsystem in der Bodenbearbeitungswalze 20 anzutreiben. Auch ein derartiges Unwuchtsystem, welches dazu ausgebildet sein kann, eine Oszillationsbewegung oder/und eine Vibrationsbewegung der Bodenbearbeitungswalze 20 zu erzeugen, kann einen oder mehrere Hydraulikmotoren umfassen, um Unwuchtmassen zur Drehung anzutreiben. Ein weiterer Hydraulikkreislauf kann einem Lenksystem zugeordnet sein. Das in einem derartigen Lenk-Hydraulikkreislauf vorhandene Druckfluid kann über ein Hydraulik-Lenkaggregat abhängig von einer Lenkbewegung eines Lenk-Betätigungsorgans, beispielsweise eines Lenkrads, Hydraulikfluid zu einer bzw. zu zwei als Lenkorgane 26 wirksamen Lenk-Kolben/Zylinder-Einheiten 28 leiten. Durch derartige Lenk-Kolben/Zylinder-Einheiten 28 werden der Vorderwagen 14 und der Hinterwagen 12 bezüglich einander um die Lenkachse verschwenkt, wodurch der Bodenverdichter bei seiner Bewegung über den Untergrund 18 gelenkt wird.

Aus der WO 2020/200509 A1 ist eine Bodenbearbeitungsmaschine gemäß dem Oberbegriff des Anspruchs 1 bekannt, bei welcher in Zuordnung zu einem hydraulischen Lenksystem eine von einem Elektromotor antreibbare Lenk-Hydraulikpumpe vorgesehen ist. In Zuordnung zu einem hydraulischen Fahrantriebssystem ist eine von einem Elektromotor antreibbare Fahr-Hydraulikpumpe vorgesehen.

Die DE 10 2007 016 112 A1 offenbart ein Verfahren zur Steuerung einer Hydraulikpumpe in einem in Zuordnung zu einem Lenksystem und einem Bremssystem vorgesehenen Servosystem. Die Drehzahl einer Hydraulikpumpe des Servosystems wird abhängig von einer Lenkanforderung bzw. einer Bremsanforderung und auch abhängig von der Fahrzeuggeschwindigkeit eingestellt. Die DE 29 50 391 A1 offenbart ein hydrostatisches Getriebe in einem Kraftfahrzeug, bei welchem eine durch ein Antriebsaggregat angetriebene Pumpe in einem Hydraulikkreislauf den Hydraulikdruck zum Betreiben einer einem Fahrantrieb zugeordneten Hydraulikpumpe und den Hydraulikdruck für ein Lenksystem generiert. Es ist die Aufgabe der vorliegenden Erfindung, eine Bodenbearbeitungsmaschine bereitzustellen, mit welchen ein hydraulisches Lenksystem und ein hydraulisches Fahrantriebssystem mit vermindertem Energieaufwand anforderungsangepasst betrieben werden können.

Erfindungsgemäß wird diese Aufgabe gelöst durch eine Bodenbearbeitungsmaschine, insbesondere Bodenverdichter, gemäß Anspruch 1. Die Bodenbearbeitungsmaschine umfasst ein hydraulisches Lenksystem mit wenigstens einem mit Druckfluid betätigten Lenkorgan und einer elektrohydraulischen Druckfluidquelle mit wenigstens einer durch wenigstens einen Elektromotor antreibbaren Lenk-Hydraulikpumpe zum Einspeisen von Druckfluid in einen Lenk-Hydraulikkreislauf.

Bei einer erfindungsgemäß aufgebauten Bodenbearbeitungsmaschine wird die Energie zum Betreiben des hydraulischen Lenksystems durch einen aus einer Batterie oder dergleichen gespeisten Elektromotor bereitgestellt. Ein derartiger Elektromotor als Antrieb für eine Lenk-Hydraulikpumpe hat im Vergleich zur Verwendung einer Diesel-Brennkraftmaschine den Vorteil, dass der Elektromotor angepasst an den momentan vorliegenden Bedarf an Energie bzw. Druckfluid betrieben werden kann und durch eine spontane Änderung der Drehzahl desselben die Möglichkeit bietet, die Menge des geförderten Druckfluids an einen sich ändernden Bedarf anzupassen. Derartige kurzfristige Änderungen sind bei Verwendung einer Diesel-Brennkraftmaschine durch Veränderung des Betriebszustandes derselben nicht realisierbar. Gleichwohl bietet das erfindungsgemäße hydraulische Lenksystem aufgrund der Einbeziehung des Lenk-Hydraulikkreislaufs beispielsweise im Vergleich zu rein elektromotorisch betriebenen Lenksystemen den Vorteil, dass eine Notlenkeigenschaft aufrechterhalten werden kann, und dass ein derartiges hydraulisches Lenksystem eine besonders hohe Überlastungs- bzw. Stoßfestigkeit hat und einer Bedienperson eine mechanische Rückkopplung des momentan vorliegenden Lenkzustandes bzw. einer Lenkbewegung gibt.

Die erfindungsgemäß aufgebaute Bodenbearbeitungsmaschine kann einen Hinterwagen und einen bezüglich des Hinterwagens um eine Lenkachse schwenkbaren Vorderwagen umfassen, wobei wenigstens ein zwischen dem Vorderwagen und dem Hinterwagen wirkendes Lenkorgan eine Lenk-Kolben/Zylinder-Einheit umfasst. Wie bereits eingangs erwähnt, ist es vorteilhaft, zwei beispielsweise als Lenk-Kolben/Zylinder-Einheiten ausgebildete Lenkorgane vorzusehen, wobei eines oder beides dieser Lenkorgane doppeltwirkend, also in beiden Betätigungsrichtungen wirkend, ausgebildet sein kann.

Um die durch eine Bedienperson bewirkte Betätigung eines Lenk-Betätigungsorgans, also beispielsweise eines Lenkrades, in eine entsprechende Verstellbewegung eines Lenkorgans umzusetzen, kann das hydraulische Lenksystem ein Hydraulik-Lenkaggregat umfassen, wobei das Hydraulik-Lenkaggregat aus dem Lenk-Hydraulikkreislauf mit Druckfluid gespeist wird und abhängig von einer Betätigung eines Lenk-Betätigungsorgans das wenigstens eine Lenkorgan mit Druckfluid beaufschlagt.

Das hydraulische Lenksystem umfasst wenigstens einen Lenksensor, wobei der Lenksensor dazu ausgebildet ist, einen Lenkzustand repräsentierende Lenkinformation bereitzustellen. Beispielsweise kann ein derartiger Lenksensor die Drehung einer Lenkwelle erfassen. Die Lenkinformation repräsentiert einen Lenkwinkel oder/und eine Lenkwinkeländerungsrate. Es ist darauf hinzuweisen, dass im Sinne der vorliegenden Erfindung eine Lenkwinkeländerungsrate eine zeitliche Änderung des Lenkwinkels, also beispielsweise die zeitliche Änderung einer Drehposition einer Lenkwelle oder die Änderung des zwischen einem Vorderwagen und einem Hinterwagen einer Bodenbearbeitungsmaschine eingenommenen Winkels, repräsentiert.

Um einen bedarfsgerechten Betrieb des hydraulischen Lenksystems zu unterstützen, ist das hydraulische Lenksystem dazu ausgebildet, den Elektromotor der elektrohydraulischen Lenk-Druckfluidquelle mit von der Lenkinformation abhängiger Drehzahl zu betreiben.

Hierzu ist das hydraulische Lenksystem dazu ausgebildet, den Elektromotor der elektrohydraulischen Lenk-Druckfluidquelle bei zunehmendem Lenkwinkel mit zunehmender Drehzahl zu betreiben oder/und den Elektromotor bei zunehmender Lenkwinkeländerungsrate mit zunehmender Drehzahl zu betreiben.

Für einen bedarfsgerechten und damit energiesparenden Betrieb des Lenksystems wird weiter vorgeschlagen, dass das hydraulische Lenksystem dazu ausgebildet ist, den Elektromotor der elektrohydraulischen Lenk-Druckfluidquelle mit von einem Fahr-Betriebszustand der Bodenbearbeitungsmaschine abhängiger Drehzahl zu betreiben. Es ist darauf hinzuweisen, dass im Sinne der vorliegenden Erfindung ein derartiger Fahr-Betriebszustand charakterisiert ist durch nicht in direktem Zusammenhang mit einer Lenkbewegung stehende Zustände bzw. nicht selbst die Lenkbewegung repräsentierende Zustände.

Beispielsweise kann der Fahr-Betriebszustand der Bodenbearbeitungsmaschine folgende Zustände umfassen:
- einen Parkzustand, wobei in dem Parkzustand ein Fahr-Betätigungsorgan in eine Parkstellung gestellt ist oder/und ein Bedienpersonsitz nicht besetzt ist,
- einen Fahr-Vorbereitungszustand, wobei in dem Fahr-Vorbereitungszustand das Fahr-Betätigungsorgan in eine Fahr-Vorbereitungsstellung gestellt ist,
- einen Fahrzustand, wobei in dem Fahrzustand das Fahr-Betätigungsorgan in eine Fahrstellung gestellt ist.

Das hydraulische Lenksystem kann unter Berücksichtigung dieser verschiedenen als Fahr-Betriebszustände betrachteten Zustände dazu ausgebildet sein,
- im Parkzustand den Elektromotor der elektrohydraulischen Lenk-Druckfluidquelle außer Betrieb zu halten,
   oder/und
- im Fahr-Vorbereitungszustand den Elektromotor der elektrohydraulischen Lenk-Druckfluidquelle mit einer Grunddrehzahl zu betreiben,
   oder/und
- im Fahrzustand den Elektromotor der elektrohydraulischen Lenk-Druckfluidquelle mit einer über der Grunddrehzahl liegenden Arbeitsdrehzahl zu betreiben.

Bei einem konstruktiv und ansteuerungstechnisch einfach ausgebildeten Aufbau kann das hydraulische Lenksystem dazu ausgebildet sein, den Elektromotor der elektrohydraulischen Lenk-Druckfluidquelle im Fahrzustand immer mit der Arbeitsdrehzahl zu betreiben. Dies bedeutet, dass immer dann, wenn eine derartige Bodenbearbeitungsmaschine im Fahrzustand ist, unabhängig davon, ob gelenkt wird, d.h. eine Änderung des Lenkzustandes vorliegt, dieser Elektromotor mit der Arbeitsdrehzahl, also einer über der Grunddrehzahl liegenden Drehzahl, betrieben wird.

Bei einer alternativen, insbesondere hinsichtlich eines effizienten Energieeinsatzes besonders vorteilhaften Variante kann das hydraulische Lenksystem dazu ausgebildet sein, den Elektromotor der elektrohydraulischen Lenk-Druckfluidquelle bei Eintritt in den Fahrzustand oder/und im Fahrzustand dann mit der Arbeitsdrehzahl zu betreiben, wenn die Lenkinformation das Vorliegen einer Änderung des Lenkzustandes indiziert. Dies bedeutet, dass das Anheben der Drehzahl dieses Elektromotors auf diejenigen Phasen während des Fahrzustandes beschränkt werden kann, in welchen zum Verändern des Lenkzustandes, also zum Ändern des Lenkwinkels, Energie aufgewandt werden muss. In Phasen, in welchen dies nicht erforderlich ist, in welchen also nicht gelenkt wird und somit eine Änderung des Lenkwinkels beispielsweise bei Geradeausfahrt oder bei Kurvenfahrt mit im Wesentlichen konstantem Kurvenradius nicht vorliegt, kann der Elektromotor mit geringerer Drehzahl, also beispielsweise der Grunddrehzahl, und somit mit geringerem Energieeinsatz betrieben werden.

Ein energiesparender und an den vorliegenden Bedarf weiter angepasster Betrieb kann dadurch unterstützt werden, dass die Grunddrehzahl abhängig ist von einer Temperatur des Hydraulikfluids im Lenk-Hydraulikkreislauf oder/und in einem aus dem Lenk-Hydraulikkreislauf gespeisten Arbeits-Hydrauliksystem, oder/und dass die Grunddrehzahl abhängig ist von einer Lastanforderung in einem aus dem Lenk-Hydraulikkreislauf gespeisten Arbeits-Hydrauliksystem.

Bei einer erfindungsgemäß aufgebauten Bodenbearbeitungsmaschine wird ein an den Energiebedarf bzw. den Bedarf an Druckfluid angepasster Betrieb des hydraulischen Lenksystems dadurch gewährleistet, dass der zum Antreiben der Lenk-Hydraulikpumpe vorgesehene Elektromotor mit einer an den vorhandenen Bedarf angepassten Drehzahl betrieben bzw. angesteuert wird. Bauliche Maßnahmen an der Lenk-Hydraulikpumpe, welche eine Anpassung von deren Fördermenge an den bestehenden Bedarf ermöglichen, sind daher nicht erforderlich, so dass die Lenk-Hydraulikpumpe eine Konstant-Fördermengen-Pumpe sein kann, bei welcher die Veränderung der Fördermenge des Hydraulikfluid ausschließlich durch eine Veränderung der Drehzahl der Pumpe bzw. des die Pumpe antreibenden Elektromotors bewirkt wird.

Bei der erfindungsgemäßen Bodenbearbeitungsmaschine ist zum Bewegen derselben über einen zu bearbeitenden Untergrund ferner ein hydraulisches Fahrantriebssystem vorgesehen, wobei das hydraulische Fahrantriebssystem eine elektrohydraulische Druckfluidquelle mit wenigstens einem Elektromotor und wenigstens einer Fahr-Hydraulikpumpe zum Einspeisen von Druckfluid in einen Fahr-Hydraulikkreislauf und wenigstens einen aus dem Fahr-Hydraulikkreislauf mit Druckfluid gespeisten Fahr-Hydraulikmotor umfasst. Auch das hydraulische Fahrantriebssystem ist somit ein elektrohydraulisches System, welches, so wie auch das elektrohydraulisch arbeitende Lenksystem, den Vorteil bietet, dass der Betrieb des Elektromotors des hydraulischen Fahrantriebssystems schnell bzw. spontan an Änderungen im Betriebszustand bzw. geforderte Änderungen im Betriebszustand anpassbar ist.

Bei der erfindungsgemäßen Ausgestaltung umfassen das hydraulische Lenksystem und das hydraulische Fahrantriebssystem voneinander unabhängig betreibbare Elektromotoren. Dies bedeutet, dass jedem dieser hydraulischen Systeme ein eigenständiger Elektromotor oder mehrere eigenständig arbeitende Elektromotoren zugeordnet sind und der Elektromotor des hydraulischen Lenksystems nicht dazu vorgesehen ist, den bzw. die Fahr-Hydraulikmotoren mit Druckfluid zu versorgen, während der Elektromotor des hydraulischen Fahrantriebssystems nicht dazu vorgesehen ist, ein Hydraulik-Lenkaggregat bzw. ein oder mehrere Lenkorgane mit Druckfluid zu speisen. Dies ermöglicht es, jedes dieser elektrohydraulischen Systeme unabhängig vom jeweils anderen System in einer an den im jeweiligen System vorhandenen Bedarf optimal angepassten Art und Weise zu betreiben.

Unabhängig davon, dass den verschiedenen hydraulischen Systemen eigenständige und unabhängig voneinander betreibbare Elektromotoren zugeordnet sein können, kann das hydraulische Lenksystem dazu ausgebildet sein, über den Lenk-Hydraulikkreislauf Druckfluid in den Fahr-Hydraulikkreislauf einzuspeisen. Dies ermöglicht es, beispielsweise einen im Fahr-Hydraulikkreislauf auftretenden Druckfluidverlust oder eine im Fahr-Hydraulikkreislauf gezielt herbeigeführte Druckfluidausspeisung aus dem Lenk-Hydraulikkreislauf zu kompensieren.

Das hydraulische Lenksystem kann weiter dazu ausgebildet sein, über den Lenk-Hydraulikkreislauf Druckfluid in ein Fluidreservoir zurückzuspeisen. Dies bedeutet, dass das hydraulische Lenksystem bzw. dessen Lenk-Hydraulikkreislauf grundsätzlich ein offener Kreislauf sein kann, der zum Vermeiden einer übermäßigen Erwärmung des darin vorhandenen Druckfluids die Rückspeisung in das Fluidreservoir ermöglicht.

Die vorliegende Erfindung wird nachfolgend mit Bezug auf die beiliegenden Figuren detailliert beschrieben. Es zeigt:
- Fig. 1: eine Seitenansicht einer als Bodenverdichter ausgebildeten Bodenbearbeitungsmaschine;
- Fig. 2: in prinzipartiger Darstellung ein hydraulisches Lenksystem und ein hydraulisches Fahrantriebssystem einer Bodenbearbeitungsmaschine;
- Fig. 3: einen Zusammenhang zwischen einer Lenkwinkeländerungsrate und einer Drehzahl eines Elektromotors einer elektrohydraulischen Druckfluidquelle des hydraulischen Lenksystems der Fig. 2.

Bevor nachfolgend mit Bezug auf die Fig. 2 der Aufbau und die Funktion eines hydraulischen Lenksystems und eines hydraulischen Fahrantriebssystems einer Bodenbearbeitungsmaschine detailliert erläutert werden, ist darauf hinzuweisen, dass die nachfolgend mit Bezug auf die Fig. 2 beschriebenen Systeme beispielsweise bei einer als Bodenverdichter ausgebildeten Bodenbearbeitungsmaschine 10 eingesetzt werden können, wie diese in Fig. 1 dargestellt ist. Grundsätzlich ist jedoch darauf hinzuweisen, dass die nachfolgend mit Bezug auf die Fig. 2 beschriebenen Systeme auch bei anders gestalteten Bodenbearbeitungsmaschinen, beispielsweise bei Bodenbearbeitungsmaschinen, die an einem Vorderwagen und an einem Hinterwagen Bodenbearbeitungswalzen aufweisen, eingesetzt werden können.

Die Fig. 2 zeigt ein allgemein mit 30 bezeichnetes hydraulisches Lenksystem. Das hydraulische Lenksystem 30 umfasst ein oder mehrere als doppeltwirkende Lenk-Kolben/Zylinder-Einheiten 28 ausgebildete Lenkorgane 26, welche über ein Hydraulik-Lenkaggregat 32 an einen Lenk-Hydraulikkreislauf 34 angekoppelt sind. Das hydraulische Lenksystem 30 umfasst eine elektrohydraulische Druckfluidquelle 36 mit einem Elektromotor 38 und einer vom Elektromotor 38 angetriebenen Lenk-Hydraulikpumpe 40. Der Elektromotor 38 des hydraulischen Lenksystems 30 steht unter der Ansteuerung einer Ansteuereinheit 42 und wird zum Antreiben der Lenk-Hydraulikpumpe 40 aus einer Spannungsquelle, beispielsweise einer Batterie 44, gespeist. Das Anlegen einer elektrischen Spannung an den Elektromotor 38 aus der Batterie 44 kann gemäß entsprechenden Ansteuervorgaben aus der Ansteuereinheit 42 erfolgen.

Die Fig. 2 zeigt weiter ein allgemein mit 46 bezeichnetes hydraulisches Fahrantriebssystem. Das hydraulische Fahrantriebssystem 46 umfasst eine hydraulische Druckfluidquelle 48 mit einem Elektromotor 50 und einer vom Elektromotor 50 angetriebenen Fahr-Hydraulikpumpe 52. Die Fahr-Hydraulikpumpe 52 fördert ein Fluid, zum Beispiel Hydrauliköl, in einem Fahr-Hydraulikkreislauf 54 und versorgt somit zwei in den Fahr-Hydraulikkreislauf 54 integrierte Fahr-Hydraulikmotoren 56, 58 mit Druckfluid. Beispielsweise können die beiden Fahr-Hydraulikmotoren 56, 58 zwei an einem Bodenverdichter vorgesehenen Bodenbearbeitungswalzen zugeordnet sein, um jede dieser Bodenbearbeitungswalzen zum Bewegen des Bodenverdichters antreiben zu können. Bei dem in Fig. 1 dargestellten Aufbau einer Bodenbearbeitungsmaschine könnte einer der beiden Fahr-Hydraulikmotoren 56, 58 einem der beiden Antriebsräder 16 zugeordnet sein, und der andere der beiden Fahr-Hydraulikmotoren 56, 58 könnte dem anderen Antriebsrad 16 zugeordnet sein. Bei einer Bodenbearbeitungsmaschine mit einer in beispielsweise zwei in Richtung der Walzendrehachse nebeneinander liegende Segmente unterteilten Bodenbearbeitungswalze könnte jedem der Segmente einer derartigen geteilten Bodenbearbeitungswalze einer der Fahr-Hydraulikmotoren 56, 58 zugeordnet sein.

Der Fahr-Hydraulikkreislauf 46 umfasst ferner eine Ausspeiseventilanordnung 60, über welche Fluid aus dem Fahr-Hydraulikkreislauf 46 zu einem Fluidreservoir 62 ausgespeist werden kann. Aus diesem Fluidreservoir 62 fördert die Lenk-Hydraulikpumpe 40 Fluid in den Lenk-Hydraulikkreislauf 34, welcher, wie in Fig. 2 dargestellt, mit dem Fahr-Hydraulikkreislauf 54 derart verknüpft ist, dass von der Lenk-Hydraulikpumpe 40 in den Lenk-Hydraulikkreislauf 34 als Druckfluid eingespeistes Fluid, zum Beispiel Hydrauliköl, in den Fahr-Hydraulikkreislauf 46 eingeleitet werden kann. Damit wird es beispielsweise möglich, dann, wenn über die Ausspeiseventilanordnung 60 aus dem Fahr-Hydraulikkreislauf 46 Fluid in das Fluidreservoir 62 ausgespeist wird, durch Nachspeisen von Fluid aus dem Lenk-Hydraulikkreislauf 34 die Menge des im Fahr-Hydraulikkreislauf 54 vorhanden Fluids im Wesentlichen konstant zu halten. Auch im Fahr-Hydraulikkreislauf 54 auftretende Fluidleckagen können auf diese Art und Weise kompensiert werden.

Der Lenk-Hydraulikkreislauf 34 umfasst ferner ein Rückspeiseventil 64, über welches aus dem Lenk-Hydraulikkreislauf 34 Fluid bzw. Druckfluid in das Fluidreservoir 62 zurückgespeist werden kann. Das Rückspeiseventil 64 kann beispielsweise druckgesteuert sein, so dass dann, wenn der Fluiddruck im Lenk-Hydraulikkreislauf 34 bzw. auch im Fahr-Hydraulikkreislauf 54 einen vorbestimmten Schwellendruck übersteigt, Fluid zum Fluidreservoir 62 abgegeben werden kann. Das Rückspeiseventil 64 arbeitet somit als Druckbegrenzungsventil.

Die Fig. 2 zeigt ferner, dass an den Lenk-Hydraulikkreislauf 34 ein oder mehrere Arbeits-Hydrauliksysteme 67 angekoppelt sind, um diese aus dem Lenk-Hydraulikkreislauf 34 bzw. über die Lenk-Hydraulikpumpe 40 mit Druckfluid zu speisen. Derartige Arbeits-Hydrauliksysteme 67 können Systeme sein, die beispielsweise auch dann zu betreiben sind, wenn der Fahr-Hydraulikkreislauf 54 inaktiv ist. Beispielsweise kann eine Feststellbremse der Bodenbearbeitungsmaschine 10 ein derartiges Arbeits-Hydrauliksystem 67 sein, ebenso wie ein bei zum Verdichten von Asphaltmaterial eingesetzten Bodenverdichtern vorhandenes Kantenandrückgerät, welches auch bei stehendem Bodenverdichter angehoben bzw. abgesenkt werden kann.

Um eine Bodenbearbeitungsmaschine, beispielsweise die in Fig. 1 dargestellte Bodenbearbeitungsmaschine 10, zu lenken, ist ein im Allgemeinen als Lenkrad ausgebildetes Lenk-Betätigungsorgan 66 vorgesehen. Eine im Bedienstand 22 Platz nehmende Bedienperson kann durch Betätigen des Lenk-Betätigungsorgans 66, also durch Drehen eines Lenkrads, die über den zu bearbeitenden Untergrund 18 sich bewegende Bodenbearbeitungsmaschine 10 lenken. Dabei wird die Lenkbewegung des Lenk-Betätigungsorgans 66 im Hydraulik-Lenkaggregat 32 umgesetzt in eine entsprechende Zufuhr von Druckfluid in eine in der Kammern jeder Lenk-Kolben/Zylinder-Einheit 28 und eine entsprechende Abgabe von Druckfluid aus der anderen der beiden Kammern jeder Lenk-Kolben/Zylinder-Einheit 28.

Die Betätigung des Lenk-Betätigungsorgans 66 wird durch einen Lenksensor 68 erfasst. Dieser kann beispielsweise die Drehbewegung einer mit dem Lenk-Betätigungsorgan 66 zur gemeinsamen Drehung gekoppelten Lenkwelle erfassen und ein den Lenkzustand repräsentierende Information beinhaltendes Signal zu der Ansteuereinheit 42 ausgeben. Diese Information kann beispielsweise eine Information über die momentane Drehposition des Lenk-Betätigungsorgans 66 bzw. der damit gekoppelten Lenkwelle sein, welche einen Lenkwinkel repräsentiert. Dabei kann ein Lenkwinkel von Null beispielsweise einen einer Geradeausfahrt entsprechenden Lenkzustand wiedergeben. Ein im Betrag zunehmender Lenkwinkel kann ein zunehmendes Einknicken des Vorderwagens 14 bezüglich des Hinterwagens 12 repräsentieren, wobei beispielsweise das Vorzeichen die Lenkrichtung, also die Einknickrichtung, repräsentieren kann.

Aus der zeitlichen Änderung eines die Lenkposition repräsentierenden Signals kann eine Lenkwinkeländerungsrate bestimmt werden. Alternativ kann unmittelbar aus der Bewegung beispielsweise des Lenk-Betätigungsorgans 66 oder der damit gekoppelten Lenkwelle ein Signal generiert werden, welches die Drehgeschwindigkeit und damit die Lenkwinkeländerungsrate repräsentiert.

Es ist weiter darauf hinzuweisen, dass eine den Lenkzustand repräsentierende Information auch beispielsweise aus dem jeweiligen Stellzustand bzw. Bewegungszustand einer Lenk-Kolben/Zylinder-Einheit 28 abgeleitet werden kann oder unmittelbar durch eine zwischen dem Vorderwagen 14 und dem Hinterwagen 12 wirkende bzw. messende Sensorik bereitgestellt werden kann.

Im Bedienstand 22 sind weitere Organe vorgesehen, über welche eine Bedienperson eine derartige Bodenbearbeitungsmaschine 10 bedienen kann. Vermittels eines beispielsweise als Fahr-Betätigungshebel 70 ausgebildeten Fahr-Betätigungsorgans 72 kann die Bedienperson die Bodenbearbeitungsmaschine 10 in Bewegung setzen. Dies bedeutet, dass beispielsweise durch Verschwenken des Fahr-Betätigungshebels 70 der Elektromotor 50 der elektrohydraulischen Druckfluidquelle 48 des hydraulischen Fahrantriebssystems 46 mit einer Drehzahl betrieben wird, welche dem von der Bedienperson vorgegebenen Fahr-Betriebszustand entspricht. Beispielsweise kann die Bedienperson den Fahr-Betätigungshebel 70 in eine Parkstellung bringen. Bei in der Parkstellung positioniertem Fahr-Betätigungshebel 70 ist die Bodenbearbeitungsmaschine 10 grundsätzlich im Stillstand und es kann beispielsweise eine Feststellbremse aktiviert werden, um ein Wegrollen zu verhindern. Durch Verschwenken aus der Parkstellung in eine Fahr-Vorbereitungsstellung wird ein Fahr-Vorbereitungszustand eingenommen. Im Fahr-Vorbereitungszustand bleiben die Fahr-Hydraulikmotoren 56, 58 nachwievor inaktiv, d. h., dass beispielsweise der Elektromotor 50 so wie im Parkzustand außer Betrieb gehalten wird, jedoch die Feststellbremse gelöst wird. Bei Verschwenken aus der dem Fahr-Vorbereitungszustand entsprechenden Fahr-Vorbereitungsstellung in eine einem Fahrzustand entsprechenden Fahrstellung wird beispielsweise eine der jeweiligen Schwenkstellung entsprechende Fahrgeschwindigkeits-Sollwert-Vorgabe und Richtungs-Vorgabe über die Steuereinheit 42 in eine der Vorgabe entsprechende Drehzahl bzw. Drehrichtung des Elektromotors 50 umgewandelt, so dass dieser die Fahr-Hydraulikpumpe 52 in einer einer jeweiligen Fahrrichtung entsprechenden Drehrichtung antreibt und die beiden Fahr-Hydraulikmotoren 56, 58 mit Druckfluid gespeist werden, wodurch die Bodenbearbeitungsmaschine 10 über den Untergrund 18 bewegt wird.

Dem Bedienpersonsitz 24 kann ein Sitzbelegungssensor 74 zugeordnet sein, welcher Information darüber bereitstellt, ob auf dem Bedienpersonsitz 24 eine Bedienperson sitzt oder nicht. Diese Information kann, ebenso wie die Information über eine jeweilige Betätigungsstellung bzw. einen Betätigungszustand des Fahr-Betätigungsorgans 72, in die Ansteuereinheit 42 eingeleitet werden, um in der nachfolgend beschriebenen Art und Weise den Elektromotor 38 der elektrohydraulischen Druckfluidquelle 36 zu betreiben.

Unter Berücksichtigung der die Sitzbelegung bzw. den Betätigungszustand des Fahr-Betätigungsorgans 72 repräsentierenden Information kann die Ansteuereinheit 42 den Elektromotor 38 beispielsweise derart ansteuern, dass bei in die Parkstellung gestelltem Fahr-Betätigungsorgan 72 der Elektromotor 38 deaktiviert wird bzw. in einem deaktivierten Zustand gehalten wird, was bedeutet, dass dessen Steuereinheit deaktiviert wird. Alternativ oder zusätzlich kann dies dann erfolgen, wenn die vom Sitzbelegungssensor 74 gelieferte Information indiziert, dass auf dem Bedienpersonsitz 24 keine Bedienperson sitzt, was zur Folge hat, dass eine optional mit versorgte Feststellbremse dadurch aktiviert wird, dass für diese kein Offenhaltedruck mehr bereitgestellt wird. Weiterhin ist dadurch auch konstruktiv sichergestellt, dass bei einem Ausfall der Steuereinheit für den Elektromotor 38 oder/und des Elektromotors 38 die Bodenbearbeitungsmaschine sicher zum Stillstand kommt.

Ist das Fahr-Betätigungsorgan 72 in der dem Fahr-Vorbereitungszustand entsprechenden Fahr-Vorbereitungsstellung, was im Allgemeinen dann der Fall ist, wenn auf dem Bedienpersonsitz 24 eine auf das Fahr-Betätigungsorgan 72 einwirkende Bedienperson sitzt, kann durch die Ansteuereinheit 42 der Elektromotor 38 der elektrohydraulischen Druckfluidquelle 36 derart betrieben werden, dass dieser mit einer Grunddrehzahl dreht. Dies hat zur Folge, dass im Lenk-Hydraulikkreislauf 34 ein Druck aufgebaut wird, der beispielsweise auch dazu genutzt werden kann, eines oder mehrere der Arbeits-Hydrauliksysteme 67 zu betreiben, beispielsweise eine Feststellbreme zu lösen. Dabei kann beispielsweise die Grunddrehzahl fest vorgegeben sein. Sie kann jedoch auch abhängig von Einflussgrößen, wie z. B. der Temperatur des Druckfluids im Lenk-Hydraulikkreislauf 34 bzw. im Bereich von einem oder mehreren der Arbeits-Hydrauliksysteme 67, angepasst werden, so dass beispielsweise mit zunehmender Temperatur des Druckfluids die Grunddrehzahl angehoben wird, um einen schnelleren Austausch des Druckfluids zu gewährleisten.

Auch abhängig von der Lastanforderung in dem bzw. in den Arbeits-Hydrauliksystemen 67 kann die Grunddrehzahl eingestellt bzw. angehoben werden. Wird beispielsweise erkannt, dass mehrere derartige Arbeits-Hydrauliksysteme 67 gleichzeitig aktiviert werden sollen, was einer hohen Lastanforderung entspricht und sich beispielsweise dadurch zeigt, dass bei vorhandener Grunddrehzahl eines oder mehrerer derartiger Arbeits-Hydrauliksysteme 67 mit zu geringer Geschwindigkeit betrieben werden, kann entsprechend die Grunddrehzahl angehoben werden.

Wird das Fahr-Betätigungsorgan 72 in die dem Fahrzustand entsprechende Fahrstellung gebracht, kann unter der Ansteuerwirkung der Ansteuereinheit 42 die an den Elektromotor 38 der elektrohydraulischen Druckfluidquelle 36 angelegte Spannung so vorgegeben werden, dass der Elektromotor 38 mit einer über der Grunddrehzahl liegenden Arbeitsdrehzahl betrieben wird, wobei die Arbeitsdrehzahl beispielsweise fest vorgegeben sein kann oder, ähnlich wie die Grunddrehzahl, abhängig von der Temperatur des Druckfluids im Lenk-Hydraulikkreislauf 34 oder/und der Lastanforderung in einem oder mehreren der Arbeits-Hydrauliksysteme 67 angepasst werden kann.

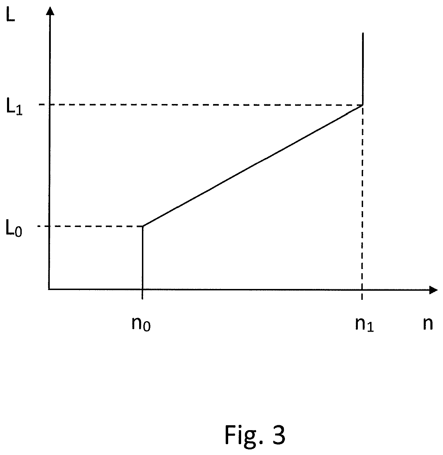

Unter Berücksichtigung der Lenkinformation, also beispielsweise einer Information über den entsprechend einer Betätigung des Lenk-Betätigungsorgans 66 vorzusehenden Lenkwinkel oder einer Lenkwinkeländerungsrate passt die Ansteuereinheit 42 die Arbeitsdrehzahl des Elektromotors 38 der elektrohydraulischen Druckfluidquelle 36 an. Dies wird nachfolgend mit Bezug auf die Fig. 3 anhand der Lenkwinkeländerungsrate L beispielhaft beschrieben.

Die Fig. 3 zeigt einen Zusammenhang zwischen der Lenkwinkeländerungsrate L und der Drehzahl n des Elektromotors 38. Die Drehzahl n des Elektromotors 38 wird bis zum Erreichen einer unteren Schwelle L₀ mit einer im Wesentlichen konstanten Drehzahl n₀ betrieben, welche beispielsweise der vorangehend beschriebenen Arbeitsdrehzahl entsprechen kann. Bei Überschreiten einer oberen Schwelle L₁ der Lenkwinkeländerungsrate L wird der Elektromotor 38 mit einer höheren Drehzahl n₁ betrieben. Zwischen der unteren Schwelle L₀ und der oberen Schwelle L₁ wird der Elektromotor 38 mit einer Drehzahl n betrieben, die in einem beispielsweise linearen Zusammenhang mit der Lenkwinkeländerungsrate L steht. Dies bedeutet, dass zwischen den Schwellen L₀ und L₁ der Elektromotor 38 so angesteuert wird, dass dessen Drehzahl n sich proportional zur Lenkwinkeländerungsrate L verändert.

Es ist darauf hinzuweisen, dass auch andere Zusammenhänge zwischen der Drehzahl n des Elektromotors 38 und der Lenkwinkeländerungsrate L vorgesehen sein können. Beispielsweise kann eine progressive oder degressive Zunahme der Drehzahl n mit der Lenkwinkeländerungsrate L vorgesehen sein, ebenso wie eine stufenartige Zunahme.

Durch die Anpassung der Drehzahl des Elektromotors 38 an die Lenkwinkeländerungsrate L besteht die Möglichkeit, auf eine durch eine hohe Lenkwinkeländerungsrate L repräsentierte hohe Lastanforderung im hydraulischen Lenksystem 30 zu reagieren und zu gewährleisten, dass ausreichend Druckfluid im Lenk-Hydrauliksystem 34 bereitgestellt ist, um eine entsprechend schnelle Lenkreaktion zu bewirken. Dies ist bei dem in Fig. 2 dargestellten Lenksystem 30 deshalb möglich, da der Elektromotor 38 sehr schnell auf eine Änderung der an diesen angelegten Spannung mit einer entsprechenden Drehzahländerung reagiert, so dass auf eine Einwirkung auf das Lenk-Betätigungsorgan 66 im Wesentlichen ohne Zeitverzögerung reagiert werden kann. Dazu ist es nicht erforderlich, an der Lenk-Hydraulikpumpe 40 irgendwelche Verstellmaßnahmen vorzunehmen, um deren Fördervolumen anzupassen. Die Änderung des Fördervolumens der Lenk-Hydraulikpumpe 40 erfolgt ausschließlich durch Änderung der Drehzahl derselben bzw. der Drehzahl des diese antreibenden Elektromotors 38. Die Lenk-Hydraulikpumpe 40 kann daher eine Konstant-Fördermengen-Pumpe sein, was einen einfachen Aufbau des hydraulischen Lenksystems 30 sowie eine einfache Ansteuerbarkeit desselben gewährleistet.

Alternativ oder zusätzlich zur Berücksichtigung der Lenkwinkeländerungsrate L bei der Ansteuerung des Elektromotors 38 wird der Lenkwinkel selbst dazu genutzt, um die Drehzahl des Elektromotors 38 anzupassen. Mit zunehmendem Lenkwinkel wird auch die Drehzahl des Elektromotors 38 angehoben, beispielsweise in einem der Fig. 3 entsprechenden, im Wesentlichen linearen Zusammenhang, einem progressiv oder degressiv zunehmenden Zusammenhang oder einem stufenartigen Zusammenhang.

Bei Eintritt in den Fahrzustand bzw. im Fahrzustand kann grundsätzlich derart vorgegangen werden, dass die Drehzahl des Elektromotors 38 auf die gegebenenfalls in der vorangehend beschriebenen Art und Weise bestimmte bzw. anzupassende Arbeitsdrehzahl eingestellt bzw. angehoben wird. Bei einer alternativen Vorgehensweise kann vorgesehen sein, dass bei Eintritt in den Fahrzustand bzw. im Fahrzustand der Elektromotor 38 nur dann mit der Arbeitsdrehzahl betrieben wird, wenn eine Änderung des Lenkzustandes auftritt, also beispielsweise aus der Geradeausfahrt in die Kurvenfahrt übergegangen werden soll, aus der Kurvenfahrt in die Geradeausfahrt übergegangen werden soll oder bei Kurvenfahrt der Kurvenradius geändert werden soll. Ändert sich der Lenkzustand nicht, bleibt also beispielsweise eine Bodenbearbeitungsmaschine beim Eintritt in den Fahrzustand bzw. im Fahrzustand in einem vorangehend vorhandenen Lenkzustand, was bedeutet, dass entweder die Bodenbearbeitungsmaschine in Geradeausfahrt oder in Kurvenfahrt mit im Wesentlichen konstantem Kurvenradius betrieben wird, wird die Drehzahl des Elektromotors 38 nicht auf die Arbeitsdrehzahl angehoben, da eine erhöhte Kraft zum Verändern des Lenkzustands nicht aufgebracht werden muss. Wird im Fahrzustand, ausgehend von einem Zustand, in welchem der Lenkzustand sich ändert, in einen Zustand mit sich nicht änderndem Lenkzustand übergegangen, kann die Drehzahl des zunächst mit der Arbeitsdrehzahl betriebenen Elektromotors 38 beispielsweise wieder auf die Grunddrehzahl gesenkt werden. Dies führt zu einem effizienten, energiesparenden Betrieb des hydraulischen Lenksystems 30.

Bei einer erfindungsgemäß aufgebauten Bodenbearbeitungsmaschine wird durch den Einsatz einer elektrohydraulischen Druckfluidquelle die Möglichkeit geschaffen, sehr schnell eine Anpassung des Betriebs derselben an den vorhandenen bzw. geforderten Lenkbetrieb zu erreichen. Dies senkt den Energieverbrauch, da eine hohe Arbeitsleistung des Elektromotors der elektrohydraulischen Druckfluidquelle des hydraulischen Lenksystems nur dann vorliegt bzw. genutzt wird, wenn dies erforderlich ist. Gleichwohl kann ein derartiges System mit der Grunddrehzahl betrieben werden, um eine Grundfunktionalität beispielsweise des hydraulischen Lenksystems oder über dieses zu speisender Arbeits-Hydrauliksysteme aufrecht zu erhalten. In der erfindungsgemäß aufgebauten Bodenbearbeitungsmaschine werden somit die Vorteile eines hydraulischen Lenksystems kombiniert mit den aus dem Einsatz eines Elektromotors zum Betreiben einer Lenk-Hydraulikpumpe hinsichtlich eines effizienten Energieeinsatzes bzw. einer Energieeinsparung bzw. auch einer gesenkten Geräuschemission in Phasen, in welchen ein Betrieb mit vergleichsweise geringer Drehzahl ausreichend ist, kombiniert.

Es ist abschließend darauf hinzuweisen, dass eine derartige Bodenbearbeitungsmaschine selbstverständlich in verschiedensten Aspekten variiert werden kann. So kann bei dem hydraulischen Lenksystem die elektrohydraulische Druckfluidquelle mehrere Lenk-Hydraulikpumpen umfassen, wobei diese durch einen gemeinsamen oder ggf. jeweils einen separaten Elektromotor der elektrohydraulischen Druckfluidquelle betrieben werden können. Auch im Bereich des hydraulischen Fahrantriebssystems können mehrere Fahr-Hydraulikpumpen vorgesehen sein, die durch einen gemeinsamen oder ggf. jeweils separate Elektromotoren angetrieben werden können. Wie bereits erläutert, kann selbstverständlich eine zum Beispiel als Bodenverdichter ausgebildete Bodenbearbeitungsmaschine selbst hinsichtlich des Einsatzes von Bodenbearbeitungswalzen bzw. Antriebsrädern anders gestaltet sein, als vorangehend beschrieben bzw. in Fig. 1 dargestellt.

## Patentansprüche

1. Bodenbearbeitungsmaschine, insbesondere Bodenverdichter, umfassend:
- ein hydraulisches Lenksystem (30) mit wenigstens einem mit Druckfluid betätigten Lenkorgan (26) und einer elektrohydraulischen Druckfluidquelle (36) mit wenigstens einer durch wenigstens einen Elektromotor (38) antreibbaren Lenk-Hydraulikpumpe (40) zum Einspeisen von Druckfluid in einen Lenk-Hydraulikkreislauf (34),
- ein hydraulisches Fahrantriebssystem (46), wobei das hydraulische Fahrantriebssystem (46) eine elektrohydraulische Druckfluidquelle (48) mit wenigstens einem Elektromotor (50) und wenigstens einer Fahr-Hydraulikpumpe (52) zum Einspeisen von Druckfluid in einen Fahr-Hydraulikkreislauf (54) und wenigstens einen aus dem Fahr-Hydraulikkreislauf (54) mit Druckfluid gespeisten Fahr-Hydraulikmotor (56, 58) umfasst,
**dadurch gekennzeichnet,**
**dass** das hydraulische Lenksystem (30) und das hydraulische Fahrantriebssystem (46) voneinander unabhängig betreibbare Elektromotoren (38, 50) umfassen,
**dass** das hydraulische Lenksystem (30) wenigstens einen Lenksensor (68) umfasst, wobei der Lenksensor (68) dazu ausgebildet ist, einen Lenkzustand repräsentierende Lenkinformation bereitzustellen, wobei die Lenkinformation einen Lenkwinkel oder/und eine Lenkwinkeländerungsrate (L) repräsentiert, dass das hydraulische Lenksystem (30) dazu ausgebildet ist, den Elektromotor (38) der elektrohydraulischen Lenk-Druckfluidquelle (36) mit von der Lenkinformation abhängiger Drehzahl (n) zu betreiben,
**dass** das hydraulische Lenksystem (30) dazu ausgebildet ist, den Elektromotor (38) der elektrohydraulischen Lenk-Druckfluidquelle (36):
- bei zunehmendem Lenkwinkel derart mit zunehmender Drehzahl (n) zu betreiben, dass bis zum Erreichen einer unteren Schwelle des Lenkwinkels der Elektromotor (38) mit im Wesentlichen konstanter Drehzahl betrieben wird, bei Überschreiten der unteren Schwelle des Lenkwinkels der Elektromotor (38) mit mit dem Lenkwinkel zunehmender Drehzahl betrieben wird,
oder/und
- bei zunehmender Lenkwinkeländerungsrate (L) derart mit zunehmender Drehzahl (n) zu betreiben, dass bis zum Erreichen einer unteren Schwelle (L₀) der Lenkwinkeländerungsrate (L) der Elektromotor (38) mit im Wesentlichen konstanter Drehzahl (n₀) betrieben wird, bei Überschreiten der unteren Schwelle (L₀) der Lenkwinkeländerungsrate der Elektromotor (38) mit mit dem Lenkwinkel (L) zunehmender Drehzahl (n) betrieben wird.

2. Bodenbearbeitungsmaschine nach Anspruch 1,
**gekennzeichnet durch** einen Hinterwagen (12) und einen bezüglich des Hinterwagens (12) um eine Lenkachse schwenkbaren Vorderwagen (14), wobei wenigstens ein zwischen dem Vorderwagen (12) und dem Hinterwagen (12) wirkendes Lenkorgan (26) eine Lenk-Kolben/Zylinder-Einheit (28) umfasst.

3. Bodenbearbeitungsmaschine nach Anspruch 1 oder 2,
**dadurch gekennzeichnet, dass** das hydraulische Lenksystem (30) ein Hydraulik-Lenkaggregat (32) umfasst, wobei das Hydraulik-Lenkaggregat (32) aus dem Lenk-Hydraulikkreislauf (34) mit Druckfluid gespeist wird und abhängig von einer Betätigung eines Lenk-Betätigungsorgans (66) das wenigstens eine Lenkorgan (26) mit Druckfluid beaufschlagt.

4. Bodenbearbeitungsmaschine nach einem der Ansprüche 1-3,
**dadurch gekennzeichnet, dass** das hydraulische Lenksystem (30) dazu ausgebildet ist, den Elektromotor (38) der elektrohydraulischen Lenk-Druckfluidquelle (36) mit von einem Fahr-Betriebszustand der Bodenbearbeitungsmaschine (10) abhängiger Drehzahl (n) zu betreiben.

5. Bodenbearbeitungsmaschine nach Anspruch 4,
**dadurch gekennzeichnet, dass** der Fahr-Betriebszustand der Bodenbearbeitungsmaschine (10) folgende Zustände umfasst:
- einen Parkzustand, wobei in dem Parkzustand ein Fahr-Betätigungsorgan (72) in eine Parkstellung gestellt ist oder/und ein Bedienpersonsitz (24) nicht besetzt ist,
- einen Fahr-Vorbereitungszustand, wobei in dem Fahr-Vorbereitungszustand das Fahr-Betätigungsorgan (72) in eine Fahr-Vorbereitungsstellung gestellt ist,
- einen Fahrzustand, wobei in dem Fahrzustand das Fahr-Betätigungsorgan (72) in eine Fahrstellung gestellt ist,
wobei das hydraulische Lenksystem (30) dazu ausgebildet ist,
- im Parkzustand den Elektromotor (38) der elektrohydraulischen Lenk-Druckfluidquelle außer Betrieb zu halten,
oder/und
- im Fahr-Vorbereitungszustand den Elektromotor (38) der elektrohydraulischen Lenk-Druckfluidquelle (36) mit einer Grunddrehzahl zu betreiben,
oder/und
- im Fahrzustand den Elektromotor (38) der elektrohydraulischen Lenk-Druckfluidquelle (36) mit einer über der Grunddrehzahl liegenden Arbeitsdrehzahl zu betreiben.

6. Bodenbearbeitungsmaschine nach Anspruch 5,
**dadurch gekennzeichnet, dass** die Grunddrehzahl abhängig ist von einer Temperatur des Hydraulikfluids im Lenk-Hydraulikkreislauf (34) oder/und in einem aus dem Lenk-Hydraulikkreislauf gespeisten Arbeits-Hydrauliksystem (67), oder/und dass die Grunddrehzahl abhängig ist von einer Lastanforderung in einem aus dem Lenk-Hydraulikkreislauf gespeisten Arbeits-Hydrauliksystem (67).

7. Bodenbearbeitungsmaschine nach Anspruch 5 oder 6, **dadurch gekennzeichnet, dass** das hydraulische Lenksystem (30) dazu ausgebildet ist, den Elektromotor (38) der elektrohydraulischen Lenk-Druckfluidquelle (36) im Fahrzustand immer mit der Arbeitsdrehzahl zu betreiben.

8. Bodenbearbeitungsmaschine nach Anspruch 5 oder 6, **dadurch gekennzeichnet, dass** das hydraulische Lenksystem (30) dazu ausgebildet ist, den Elektromotor (38) der elektrohydraulischen Lenk-Druckfluidquelle (36) bei Eintritt in den Fahrzustand oder/und im Fahrzustand dann mit der Arbeitsdrehzahl zu betreiben, wenn die Lenkinformation das Vorliegen einer Änderung des Lenkzustandes indiziert.

9. Bodenbearbeitungsmaschine nach einem der Ansprüche 1-8,
**dadurch gekennzeichnet, dass** die Lenk-Hydraulikpumpe (40) eine Konstant-Fördermengen-Pumpe ist.

10. Bodenbearbeitungsmaschine nach einem der Ansprüche 1-9,
**dadurch gekennzeichnet, dass** das hydraulische Lenksystem (30) dazu ausgebildet ist, über den Lenk-Hydraulikkreislauf (34) Druckfluid in den Fahr-Hydraulikkreislauf (54) einzuspeisen.

11. Bodenbearbeitungsmaschine nach einem der Ansprüche 1-10,
**dadurch gekennzeichnet, dass** das hydraulische Lenksystem (30) dazu ausgebildet ist, über den Lenk-Hydraulikkreislauf (34) Druckfluid in ein Fluidreservoir (62) zurückzuspeisen.

## Claims

1. A soil processing machine, in particular a soil compactor, comprising :
- a hydraulic steering system (30) with at least one steering element (26) actuated with pressurized fluid and an electrohydraulic pressurized fluid source (36) with at least one steering pressurized fluid pump (40) that can be driven by at least one electric motor (38) for feeding pressurized fluid into a steering pressurized fluid circuit (34),
- a hydraulic drive system (46) wherein the hydraulic drive system (46) comprises an electrohydraulic pressurized fluid source (48) with at least one electric motor (50) and at least one hydraulic drive pump (52) for supplying pressurized fluid to a hydraulic drive circuit (54) and at least one hydraulic drive motor (56, 58) supplied with pressurized fluid from the hydraulic driving circuit (54),
**characterized in**
the hydraulic steering system (30) and the hydraulic drive system (46) comprise electric motors (38, 50) which can be operated independently of one another, that the hydraulic steering system (30) comprises at least one steering sensor (68), wherein the steering sensor (68) is designed to provide steering information representing a steering state, wherein the steering information represents a steering angle and/or a steering angle change rate (L),
that the hydraulic steering system (30) is designed to operate the electric motor (38) of the electrohydraulic steering pressurized fluid source (36) at a speed (n) dependent on the steering information,
that the hydraulic steering system (30) is designed to operate the electric motor (38) of the electrohydraulic steering pressure fluid source (36):
- with increasing speed (n) as the steering angle increases, such that the electric motor (38) is operated at a substantially constant speed until a lower threshold of the steering angle is reached, and when the lower threshold of the steering angle is exceeded, the electric motor (38) is operated at a speed that increases with the steering angle,
and/or
- with increasing speed (n) as the steering angle change rate (L) increases, such that until a lower threshold (L₀) of the steering angle change rate (L) is reached, the electric motor (38) is operated at a substantially constant speed (n₀) until a lower threshold (L₀) of the steering angle change rate is reached, and when the lower threshold (L₀) of the steering angle change rate is exceeded, the electric motor (38) is operated at a speed (n) that increases with the steering angle (L).

2. The soil processing machine according to claim 1,
**characterized by** a rear carriage (12) and a front carriage (14) which can be pivoted about a steering axis with respect to the rear carriage (12), wherein at least one steering element (26) acting between the front carriage (12) and the rear carriage (12) comprises a steering piston/cylinder unit (28).

3. The soil processing machine according to claim 1 or 2,
**characterized in that** the hydraulic steering system (30) comprises a hydraulic steering unit (32), wherein the hydraulic steering unit (32) is supplied with pressurized fluid from the steering pressurized fluid circuit (34) and the at least one steering element (26) is exposed to pressurized fluid depending on an actuation of a steering actuator (66).

4. The soil processing machine according to any of claims 1-3,
**characterized in that** the hydraulic steering system (30) is designed to operate the electric motor (38) of the electrohydraulic steering pressurized fluid source (36) at a speed (n) dependent on a driving operating state of the soil processing machine (10).

5. The soil processing machine according to claim 4,
**characterized in that** the driving operating state of the soil processing machine (10) comprises the following states:
- a parking state, wherein a driving actuator (72) is placed in a parking position and/or an operator's seat (24) is not occupied in the parking state;
- a driving preparation state, wherein the driving actuator (72) is placed in a driving preparation position in the driving preparation state,
- a driving state, wherein the driving actuator (72) is placed in a driving position in the driving state,
wherein the hydraulic steering system (30) is designed
- to keep the electric motor (38) of the electrohydraulic steering pressurized fluid source out of operation in the parking state,
and/or
to operate the electric motor (38) of the electrohydraulic steering pressurized fluid source (36) at a base speed in the driving preparation state,
and/or
- to operate the electric motor (38) of the electrohydraulic steering pressurized fluid source (36) at a working speed which is higher than the base speed in the driving state.

6. The soil processing machine according to claim 5,
**characterized in that** the base speed depends on a temperature of the hydraulic fluid in the hydraulic steering circuit (34) and/or in a working hydraulic system (67) fed from the hydraulic steering circuit, and/or **in that** the base speed depends on a load requirement in a working hydraulic system (67) fed from the hydraulic steering circuit.

7. The soil processing machine according to claim 5 or 6,
**characterized in that** the hydraulic steering system (30) is designed to operate the electric motor (38) of the electrohydraulic steering pressurized fluid source (36) always at the working speed in the driving state.

8. The soil processing machine according to claim 5 or 6,
**characterized in that** the hydraulic steering system (30) is designed to operate the electric motor (38) of the electrohydraulic steering pressurized fluid source (36) at the working speed upon entering the driving state and/or in the driving state when the steering information indicates the presence of a change in the steering state.

9. The soil processing machine according to any of claims 1-8,
**characterized in that** the hydraulic steering pump (46) is a constant delivery rate pump.

10. The soil processing machine according to claim 1-9,
**characterized in that** the hydraulic steering system (30) is designed to replenish pressurized fluid to the hydraulic drive circuit (54) via the hydraulic steering circuit (34).

11. The soil processing machine according to any of claims 1-10,
**characterized in that** the hydraulic steering system (30) is designed to return pressurized fluid to a fluid reservoir (62) via the hydraulic steering circuit (34).

## Revendications

1. Une machine de traitement du sol, en particulier compacteur de sol, comprenant :
- un système de direction hydraulique (30) avec au moins un élément de direction (26) actionné par un fluide sous pression et une source de fluide sous pression électrohydraulique (36) avec au moins une pompe à fluide sous pression de direction (40) pouvant être entraînée par au moins un moteur électrique (38) pour alimenter en fluide sous pression un circuit de fluide sous pression de direction (34),
- un système d'entraînement hydraulique (46) dans lequel le système d'entraînement hydraulique (46) comprend une source de fluide sous pression électrohydraulique (48) avec au moins un moteur électrique (50) et au moins une pompe d'entraînement hydraulique (52) pour alimenter en fluide sous pression un circuit d'entraînement hydraulique (54) et au moins un moteur d'entraînement hydraulique (56, 58) alimenté en fluide sous pression provenant du circuit d'entraînement hydraulique (54).
**caractérisé**
**en ce que** le système de direction hydraulique (30) et le système d'entraînement hydraulique (46) comprennent des moteurs électriques (38, 50) qui peuvent fonctionner indépendamment l'un de l'autre,
**en ce que** le système de direction hydraulique (30) comprend au moins un capteur de direction (68), le capteur de direction (68) étant conçu pour fournir des informations de direction représentant un état de direction, les informations de direction représentant un angle de direction et/ou un taux de variation d'angle de direction (L),
**en ce que** le système de direction hydraulique (30) est conçu pour faire fonctionner le moteur électrique (38) de la source de fluide sous pression de direction électrohydraulique (36) à une vitesse (n) dépendant des informations de direction,
**en ce que** le système de direction hydraulique (30) est conçu pour faire fonctionner le moteur électrique (38) de la source de fluide sous pression de direction électrohydraulique (36) :
- à une vitesse croissante (n) à mesure que l'angle de direction augmente, de telle sorte que le moteur électrique (38) fonctionne à une vitesse sensiblement constante jusqu'à ce qu'un seuil inférieur de l'angle de direction soit atteint, et lorsque le seuil inférieur de l'angle de direction est dépassé, le moteur électrique (38) fonctionne à une vitesse qui augmente avec l'angle de direction,
et/ou
- à une vitesse croissante (n) à mesure que le taux de variation de l'angle de direction (L) augmente, de telle sorte que jusqu'à ce qu'un seuil inférieur (L₀) du taux de variation de l'angle de direction (L) soit atteint, le moteur électrique (38) fonctionne à une vitesse sensiblement constante (n₀) jusqu'à ce qu'un seuil inférieur (L₀) du taux de variation de l'angle de direction soit atteint, et lorsque le seuil inférieur (L₀) du taux de variation de l'angle de direction est dépassé, le moteur électrique (38) fonctionne à une vitesse (n) qui augmente avec l'angle de direction (L).

2. La machine de traitement du sol selon la revendication 1,
**caractérisée par** un chariot arrière (12) et un chariot avant (14) qui peut pivoter autour d'un axe de direction par rapport au chariot arrière (12), dans laquelle au moins un élément de direction (26) agissant entre le chariot avant (14) et le chariot arrière (12) comprend une unité piston/cylindre de direction (28).

3. La machine de traitement du sol selon la revendication 1 ou 2,
**caractérisée en ce que** le système de direction hydraulique (30) comprend une unité de direction hydraulique (32), dans lequel l'unité de direction hydraulique (32) est alimentée en fluide sous pression à partir du circuit de fluide sous pression de direction (34) et ledit au moins un élément de direction (26) est exposé au fluide sous pression en fonction de l'actionnement d'un actionneur de direction (66).

4. La machine de traitement du sol selon l'une quelconque des revendications 1 à 3, **caractérisée en ce que** le système de direction hydraulique (30) est conçu pour faire fonctionner le moteur électrique (38) de la source de fluide sous pression de direction électrohydraulique (36) à une vitesse (n) dépendant d'un état de fonctionnement de conduite de la machine de traitement du sol (10).

5. La machine de traitement du sol selon la revendication 4,
**caractérisée en ce que** l'état de fonctionnement de conduite de la machine de traitement du sol (10) comprend les états suivants :
- un état de stationnement, dans lequel un actionneur de conduite (72) est placé dans une position de stationnement et/ou un siège de conducteur (24) n'est pas occupé dans l'état de stationnement ;
- un état de préparation à la conduite, dans lequel l'actionneur de conduite (72) est placé dans une position de préparation à la conduite dans l'état de préparation à la conduite ;
- un état de conduite, dans lequel l'actionneur de conduite (72) est placé dans une position de conduite dans l'état de conduite ;
dans lequel le système de direction hydraulique (30) est conçu
- pour maintenir le moteur électrique (38) de la source de fluide sous pression de direction électrohydraulique hors service dans l'état de stationnement ; et/ou
- pour faire fonctionner le moteur électrique (38) de la source de fluide sous pression de direction électrohydraulique (36) à une vitesse de base dans l'état de préparation à la conduite ;
et/ou
- pour faire fonctionner le moteur électrique (38) de la source de fluide sous pression de la direction électrohydraulique (36) à une vitesse de travail supérieure à la vitesse de base dans l'état de conduite.

6. La machine de traitement du sol selon la revendication 5,
**caractérisée en ce que** la vitesse de base dépend d'une température du fluide hydraulique dans le circuit de direction hydraulique (34) et/ou dans un système hydraulique de travail (67) alimenté par le circuit de direction hydraulique, et/ou **en ce que** la vitesse de base dépend d'une exigence de charge dans un système hydraulique de travail (67) alimenté par le circuit de direction hydraulique.

7. La machine de traitement du sol selon la revendication 5 ou 6,
**caractérisée en ce que** le système de direction hydraulique (30) est conçu pour faire fonctionner le moteur électrique (38) de la source de fluide sous pression électrohydraulique (36) toujours à la vitesse de travail en état de conduite.

8. La machine de traitement du sol selon la revendication 5 ou 6,
**caractérisée en ce que** le système de direction hydraulique (30) est conçu pour faire fonctionner le moteur électrique (38) de la source de fluide sous pression de direction électrohydraulique (36) à la vitesse de travail lors de l'entrée en état de conduite et/ou en état de conduite lorsque les informations de direction indiquent la présence d'un changement dans l'état de direction.

9. La machine de traitement du sol selon l'une quelconque des revendications 1 à 8, **caractérisée en ce que** la pompe de direction hydraulique (46) est une pompe à débit constant.

10. La machine de traitement du sol selon la revendication 1 à 9,
**caractérisée en ce que** le système de direction hydraulique (30) est conçu pour réapprovisionner en fluide sous pression le circuit d'entraînement hydraulique (54) via le circuit de direction hydraulique (34).

11. La machine de traitement du sol selon l'une quelconque des revendications 1 à 10, **caractérisée en ce que** le système de direction hydraulique (30) est conçu pour renvoyer le fluide sous pression vers un réservoir de fluide (62) via le circuit de direction hydraulique (34).
